# EUROPEAN PATENT APPLICATION

(11) **EP 1 914 683 A2**
(43) Date of publication of application: **23.04.2008**
(21) Application number: 07012279.1
(22) Date of filing: 22.06.2007
(51) Int. Cl.: G06T 7/20

(54) **Quantification and visualization of the motion and deformation of one or several objects inside a living entity**

(30) Priority: 23.06.2006 EP 06013018; 09.02.2007 US 704890
(71) Applicant: Mattes, Julian, 6060 Hall in Tirol (AT)
(72) Inventor: Mattes, Julian, 4293 Gutau (AT); Chemelli-Steingruber, Iris, 6020 Innsbruck (AT); Fritscher, Karl, 6020 Innsbruck (AT); Netzer, Michael, 6460 Imst - Tirol (AT); Schubert, Rainer, 6020 Innsbruck (AT); Lopez, Alfredo, 4020 Linz (AT)
(74) Representative: Vossius & Partner

(57) **Abstract**

The invention relates to the quantitative analysis and/or visualization of the relative motion of objects in particular of the relative motion of one or several objects inside a living entity, for instance the human body or a living cell. The invented system and method allow to quantify and visualize the motion of these objects with respect to the parts of the living entity, which can deform and move itself with respect to each other. Furthermore, the method allows to identify movements and deformations which correspond to situations with a particular meaning for the living entity, for instance predicting complications in a disease progress, etc. An important application is the analysis of motion and deformation of stentgrafts introduced after endovascular repair of aneurysms. Here, the occurrence of deformations leading to graft-limb occlusions and of migrations of the stent-graft leading to so-called endoleaks can be predicted in an early stage. This allows an early intervention, hence, avoiding more severe problems. The motion is calculated from pairs of images corresponding to different points in time using semi-automatic steps to extract point sets (or binary images) and an automatic procedure to determine the motion and deformation of the point sets and to describe it quantitatively. An important part of the method is the visualization allowing the user to have an immediate impression of the occurring movements and deformations.

## Description

Background information relating to the present invention can be found in the co-pending patent application
Mattes, Eils, Fieres, Demongeot, "Quantitative Analysis, Visualization, .." PCT Patent Application WO 02/071333 A2, PCT/EP02/02580, filed March 8, 2002 with priority applications 101 11 226.2 DE, filed March, 8, 2001 and 101 44 629.2 DE, filed September, 11, 2001 (herein afterwards referred to as MEF01)
and the articles
Mattes, J., Fieres, J. and Eils, R. A shape adapted motion model for non-rigid registration. In: SPIE Medical Imaging 2002: Image Processing, 2002, 518-527
and
Fritscher, K., R. Schubert. A software framework for preprocessing and level-set segmentation of medical image data. In: SPIE Medical Imaging 2005: Image Processing 1742-1752
and
Handbook of Medical Imaging, Volume 2: Medical Image Processing and Analysis. Milan Sonka and J. Michael Fitzpatrick Editors, SPIE Press, 2000 (herein afterwards referred to as SoF00)
and
W.J. Schroeder, J.A. Zarge, and W.E. Lorensen, "Decimation of Triangle Meshes," Proc. SIGGRAPH '92, pp. 65-70, 1992 (herein afterwards referred to as SZL92)
and
R. Shekhar, E. Fayad, R. Yagel, and F. Comhill, Octree-Based Decimation of Marching Cubes Surfaces Proc. Visualization Conf., pp. 335-342, Sept. 1996. (herein afterwards referred to as SFY96)
and
H. Hoppe, "Progressive Meshes," Proc. SIGGRAPH '96, pp. 99-108, 1996 (herein afterwards referred to as Hop96)
and
http://public.kitware.com/VTK/doc/nightly/html/classvtkDecimatePro.html
and
Weishi L., Shuhong X., Shuhong Xu., Conghua W. Feature-preserving smoothing algorithm for polygons and meshes. Proceedings ACM SIGGRAPH 2004 International conference on Virtual Reality continuum and its applications in industry, 2004, 246 - 252 (herein afterwards referred to as WSS04)
and
Y. Ohtake, A. Belyaev, and H.-P.Seidel, "Mesh Smoothing by Adaptive and Anisotropic Gaussian Filter", In Vision, Modelling and Visualisation, pp. 203--210, 2002 (herein afterwards referred to as OBS02)
and
http://public.kitware.com/VTK/doc/nightly/html/classvtkSmoothPolyDataFilter.html

### Summary of the Invention

The invention relates to the quantitative analysis and/or visualization of the relative motion of objects, in particular of the relative motion of one or several objects inside a living entity, for instance the human body or a living cell. The invented system and method allow to quantify and visualize the motion of these objects with respect to the parts of the living entity, which can deform and move itself with respect to each other. Furthermore, the method allows to identify movements and deformations which correspond to situations with a particular meaning for the living entity, for instance predicting complications in a disease progress, etc. An important application is the analysis of motion and deformation of stent-grafts introduced after endovascular repair of aneurysms. Here, the occurrence of deformations leading to graft-limb occlusions and of migrations of the stent-graft leading to so-called endoleaks can be detected or predicted in an early stage. This allows an early intervention, hence, avoiding more severe problems. The motion is calculated from pairs of images corresponding to different points in time using automatic and/or semi-automatic steps to extract point sets (or binary images) and an automatic procedure to determine the motion and deformation of the point sets and to describe it quantitatively. An important part of the method is the visualization allowing the user to have an immediate impression of the occurring movements and deformations.

The motion of an object inside a living entity as it can be observed with an imaging device is of interest in many situations ranging from microscopic observations in cell biology up to macroscopic processes in the human body. In particular, the motion of an object relative to the entity or to some of its components may reveal insight into the state of the entity and into mechanisms taking place inside it which may be related to the entity's functionality. The investigation of the motion of the considered object requires the determination of its motion relative to the entity (and to its parts) and the definition of a reference system for this purpose. Hence, we propose the extraction of a reference object, especially if the entity can move with respect to the image acquisition system, and we prefer this approach to possible alternatives using purely grey-level based motion estimation.

A patricular challenge is, compared to previous studies of the relative motion of connected vertebras (T. Ishii, Y. Mukai, et al. "Kinematics of upper cervical spine in rotation: in vivo three-dimensional analysis" Spine 29(7), E139-E144, 2004) that the investigated object is moving as a whole (and this global motion shall be investigated as well as the local motion) and that the degrees of freedom of possible deformations can be very high. Therefore, according to the present invention we segment this object (and extract its surface from the considered volume image stack) as well as an independent reference object. These problems are illustrated by an important application of the problem addressed by the present invention, namely, the quantification and deformation of abdominal aortic aneurysm stent grafts.

The enlargement of the aorta due to its weakened walls is called an abdominal aortic aneurysm (AAA). From a diameter of 5 cm on the AAA should be treated because of the perilous risk of rupture. A treatment established in the early nineties is the endovascular aneurysm repair (EVAR) in which a bifurcated wire mesh tube, called stent, coated with a synthetic graft (stent-graft) is placed inside the aorta (Parodi et al. (1991) Ann Vasc Surg 5(6) pp 491-499). Similarly, stent-grafts are used to treat aneurysms or stenoses of any other arterial vessels. Whereas aneurysms occur mostly in the aortic or the cerebral arteries, stenoses are often located within the carotid, the coronary, the renal or the femoral arteries. A major problem coming up after endovascular stent-graft repair of an abdominal aortic aneurysm (AAA) is the stent-graft migration (Harris, PL. et al. (2000) Incidence and risk factors of late rupture, conversion, and death after endovascular repair of infrarenal aortic aneurysms: the EUROSTAR experience. European Collaborators on stent-graft techniques for aortic aneurysm repair. J Vasc Surg. 2000 Oct;32(4):739-49), which can implicate a kinking or buckling of the stent-graft. It may result in the occurrence of leakages and/or fatigue of the stent-graft material. Both complications lead to ongoing aneurismal diseases. Rupture of the aneurysm may occur. Beside leakages and fatigue of the stent-graft material, migration may introduce limb occlusions, which have to be treated by a femoro-femoral cross-over bypass. For these reasons, a considerable number of vascular surgeons favours the classical open AAA repair (requiring an open surgical intervention) even though numerous improvements of EVAR have been realized in the past 10 years.

An accurate diagnosis of the mentioned problems requires a precise and observer independent description of the migration and deformation of the stent-graft, in particular, in relation to the anatomical structures around and in its proximity. Beside the relative mobile anatomical structures of the abdomen (e.g., the renal arteries), there is also a need for a fixed reference system, which represents, according to this invention, the spinal canal or the renal arteries. The description shall allow to identify motion/deformation patterns corresponding to a high probability of a dangerous progress of disease for the patient, for instance, the identification a strong bending leading to a kink coming with a limb occlusion. Thus, the description comes with a prediction of future complications and disease progression. As the considered processes are complex and as the data coming from the medical imaging device are difficult to assess visually, a computer-assisted analysis is required.

Currently, the morphological changes and the migration of the stent and those of the aneurysm after an endovascular stent-graft repair are not studied systematically on an appropriate and accurate quantitative basis representing the complexity of these movements. In particular, besides our own attempt (Mattes, J. and et al. (2005) Spatio-temporal changes and migration of stent grafts after endovascular aortic aneurysm repair CARS 2005, pp 393-397; Mattes, J. et al. (2006) Quantification of the migration and deformation of abdominal aortic aneurysm stent grafts. SPIE Medical Imaging 2006: Image Processing) an effort is lacking for a precise and systematic quantitative description taking the 3D nature of the motion (or even its non-rigid complexity) fully into account.

In several clinical studies measurements have been reported which quantify migration and shape changes (Zarins,C.K. et al. (2003) Stent graft migration after endovascular aneurysm repair: importance of proximal fixation. J Vasc Surg. 38(6):1264-72). They are often not very precise and include counting of slices or measuring interactively screen distances (Steingruber, I.E. et al. (2006) Technical and clinical success of infrarenal endovascular abdominal aortic aneurysm repair: A 10-year single-center experience. European J. Radiology 59:384-392). Hence, the translational migration of the stent-graft is extracted only roughly, no rotational movement is determined and no deformation is quantified. The movement of a stent-graft on which 10 tantalum markers have been placed, was quantified on phantom data (Georg, C. et al. (2005) Aortic stent-graft movement detection using digital roentgen stereophotogrammetric analysis on plane film radiographs - initial results of a phantom study.Rofo. 177(3):321-5). However, it is not clear how the migration is measured *in situ* (in a living patient and a time interval of several months/years) with respect to a fixed reference system using this marker based approach.

Other applications include the quantification and visualization of the motion of stent-grafts implanted introduced into any other vessel of the human body, for instance, in case of an aneurysm or a stenosis of arteries, or any other implant or prosthesis relative to structures in its neighbourhood. Beside aneurysms of the aorta, most frequent are aneurysms of the brain or of the iliacal and the renal arteries, where these arteries are also subject to stenosis. Stenosis happen also in these arteries as well as in the coronary vessels. Furthermore, they may appear for the air tube or for the gullet, for instance, if a tumour is confining the tube from outside. Besides these cases, stent-grafts are also inserted if a thrombosis appears in the venous vascular system. Prostheses, for instance, hip, knee, or ankle joint prostheses are other implants which may start to move inside the human body after the abrasion of the respective joint and it would be beneficial to analyze their movements by the method proposed below.

As well, the quantification and visualization of the motion of mobile objects belonging to the living entity itself, for example, nuclear bodies inside the nucleus of a cell, relative to other structures of the entity (for instance, the nuclear envelope in the example above) are applications of the method described below. In the international patent application No. PCT/US2004/032724, filed 2004 October, 4, the local motion of the heart has been analysed, however, not with respect to a selected anatomical reference structure but relative to the entire image background.

The following embodiments are preferred embodiments of the present invention:
1. A method for the quantification and visualization of the motion and deformation of one or several objects inside a living entity, called the objects to be analyzed, imaged by an imaging system comprising the steps of:
   a) Extraction of the surface of one or several reference objects represented in the images, preferably 3D images, taken for two or more points in time,
   b) extraction of the surface of one or several objects to be analyzed represented in the images, preferably 3D images, taken for two or more points in time,
   c) registration of one of the reference objects considered in a) based on the extracted surfaces for two points in time according to a motion model describing the motion of the reference system and allowing to determine the motion parameters of this motion model,
   d) transformation of the surfaces of one or more of the object(s) to be analyzed for the moving point in time in c) according to the motion parameters and the motion model determined and used, respectively, in c) and optionally of one or more of the reference objects for the same point in time;
   which are followed by one or both of the following steps:
   e) Visualization of the scene containing zero, one or more reference objects and one or more objects to be analyzed, the surface of each shown optionally for one or both points in time used during registration but after execution of steps a)-d), i.e. transformed for the moving point in time (according steps c) and d)), respectively, and/or
   f) registration of one or more objects to be analyzed for the two points in time considered in step c), after having these objects transformed for the moving point in time, according to step d).
2. The method according to embodiment 1,
   - wherein steps a) and b) are executed for more than two points in time and
   - wherein one point in time is selected for which the steps c) and d) are repeated for each of the other points in time and
   - wherein in step e), if step e) is executed, the surfaces of the object(s) to be analyzed are optionally shown for more than two points in time simultaneously and
   - wherein in step f), if for the execution of step f) two points in time shall be taken into account in between of which lies one or more other point(s) in time, the surface of the object(s) to be analyzed for the first point in time is successively registered with that of the second point in time, wherein, if the second point in time is the moving point in time, the inverse of this transformation is estimated and the surface for the first point in time is transformed with this estimated transform, else the first point in time is transformed during registration, and wherein, the transformed first point in time is consecutively registered with the third point in time in the same way, etc. and wherein the quantitative and visual parameters for describing the transformation of the surface at the first point in time until the last point in time are derived from the composition of these stepwise transformations.
3. The method according to embodiment 2. wherein in the modified step f) the surface at the last point in time takes the role of that at the first point in time, the surface at the second last point in time of that at the second point in time, etc.
4. The method according to embodiment 2 wherein in the modified step f) for each consecutive pair of points in time a registration is performed leading to a transformation and the transformation of a surface of the first point in time, or respectively the last point in time, to that of another selected point in time is calculated by the composition of the transformations obtained for the pairs of points in time in between, by transforming the surface of the first point in time, or respectively the last point in time, with this composed transformation and finally by registering the transformed surface with the surface at the selected point in time.
5. The method according to embodiment 1 wherein steps a) c), d) and e) are omitted or replaced by a rigid grey value based registration and wherein step f) is based directly on the surfaces extracted in step b) or, respectively, on these surfaces after having them transformed according to the rigid grey value based registration mentioned above.
6. The method according to embodiment 1, in the case that several independent reference systems and objects are available, wherein
   - step c) is executed for two or more reference systems separately and
   - wherein step d) is executed for two or more of the reference systems used in c) for registration and
   - wherein in step e), if step e) is executed, for one or more of these systems an independent scene is created for visualization containing the objects described in step e) and
   - wherein, if step f) is executed, it may be executed each time after an execution of step d)
7. The method according to embodiment 1 wherein the registration in step c) and/or in step f) is fully automated.
8. The method according to embodiment 1 wherein the registration in step c) and/or in step f) consists of a rigid registration.
9. The method according to embodiment 1 wherein the registration in step f) consists of a rigid followed by a non-rigid registration.
10. The method according to embodiment 9 wherein the non-rigid registration in step f) consists of an affine registration.
11. The method according to embodiment 9 wherein the non-rigid registration in step f) consists of an affine registration followed by a deformable registration.
12. The method according to embodiment 11 wherein the deformable registration in step f) allows successively more degrees of freedom.
13. The method according to embodiment 11 or 12 wherein the deformable registration in step f) consists of a parametric registration.
14. The method according to embodiment 11 or 12 wherein the deformable registration in step f) consists of a non-parametric registration.
15. The method according to embodiment 14 wherein a demons based non-parametric registration is applied.
16. The method according to embodiment 13 wherein a parametric deformable registration using a motion model based on volume splines is applied.
17. The method according to embodiment 16 wherein the volume splines are thin-plate splines (TPS).
18. The method according to embodiment 17 wherein the control points of the TPS are inserted using a clustering based insertion scheme.
19. The method according to embodiment 18 wherein the control points of the TPS are inserted using the insertion scheme of the cluster method of Fieres-Mattes.
20. The method according to embodiment 16 wherein the volume splines are B-splines.
21. The method according to embodiment 20 wherein the control points of the B-splines are inserted using an octree scheme according to Szeliski-Lavallée.
22. The method according to embodiment 20 and 21 wherein tri-linear B-splines are used.
23. The method according to embodiment 1 wherein the registration in step c) and/or f) comprises a parametric motion model, a cost functional assigning to a possible motion parameter vector (according to the parametric motion model) a cost value, and an optimization method finding automatically (usually approximately) the parameter vector for which the cost value is minimal.
24. The method according to embodiment 23 wherein the optimization method is executed semi-automatically.
25. The method according to embodiment 1 wherein during or after the surface extraction in steps a) and b) surface points are extracted and kept in point sets in such a way that each point set represents the geometry of the corresponding surface sufficiently well for the subsequent registration and wherein the said point sets are used for registration in step c) and/or in step f).
26. The method according to embodiment 1 wherein in steps a) and/or b) directly surface points (instead of surfaces) are extracted, for instance by an edge detection operator, and the extracted surface points are kept in point sets in such a way that each point set represents the geometry of the corresponding surface sufficiently well for the subsequent registration and wherein the said point sets are used for registration in step c) and/or in step f).
27. The method according to embodiment 25 wherein a sub-sampling algorithm is applied to one or more of the point sets in order to reduce the number of points in them while preserving the geometry of the arrangement of the points sufficiently well for the subsequent registration in step c) and/or in step f).
28. The method according to embodiment 27 wherein one of the sub-sampling algorithms vtkDecimate or octreeDecimate is used.
29. The method according to embodiment 25, 27 or 28 wherein a surface smoothing algorithm is used, for instance one of the algorithms vtkSmooth, preserve Smooth or anisotropicSmooth.
30. The method according to embodiment 25, 27, 28, or 29 wherein for registering the moving point in time onto the fixed point in time in step c) and/or in step f) the similarity measure sdnN (or alternatively sdnSP) is used.
31. The method according to embodiment 30 wherein for efficient calculation of sdnN (or sdnSP) before the optimization of the cost functional an octree-distance-map is pre-calculated around each point set (or surface) extracted for the fixed point in time corresponding to an object which shall be registered in step c) and/or in step f).
32. The method according to embodiment 30 or 31 wherein the Levenberg-Marquardt method is used for optimization.
33. The method according to embodiment 1 wherein, after registration in step c),
   - the value of a cost functional is determined for the registered reference object(s) (including, if applicable, the obtained transformation)
   - the point in time which has been considered to be moving (during registration in step c)) is considered to be fixed and the point in time which has been considered to be fixed is considered to be moving and a further registration (based on the same motion model) of the untransformed reference objects is executed under these conditions and
   - the value of the cost functional above is determined for the reference object registered in the direction as described above and
   - wherein in the consecutive steps d) -f) the transformation calculated in c) is replaced by the transformation (calculated by the registration steps above) leading to the lower cost value above.
34. The method according to embodiment 33 wherein, if the registration in step c) uses a cost functional, this cost functional and the cost functional mentioned in embodiment 33 are the same.
35. The method according to embodiment 33 wherein, if the registration in step c) uses a cost functional, the cost functional mentioned in embodiment 33 is a symmetrized version of the one used in step c).
36. The method according to embodiment 1 wherein, if step f) consists of a registration with a certain parametric motion model, after this registration
   - the value of a similarity measure is determined for the registered object(s) to be analyzed
   - the moving point in time during registration in step f) is considered to be fixed and the point in time which has been considered to be fixed is considered to be moving and a further registration (based on the same motion model) of the introduced objects transformed as after step d) is executed under these conditions and
   - the value of the cost functional above is determined for the reference object registered in the direction as described above and
   - the transformation (calculated by the registration steps above) leading to the lower cost value is determined.
37. The method according to embodiment 36 wherein the parametric motion model is a rigid motion model.
38. The method according to embodiment 36 or 37 followed by a registration of the objects to be analyzed performed in the same direction as the registration leading to the lower cost value in embodiment 36 (or 37, respectively) (and starting with the objects to be analyzed transformed according to this registration) and using a motion model with more degrees of freedom than the motion model used in embodiment 36 (or 37, respectively).
39. The method according to embodiment 38 wherein after the rigid and the subsequent non-rigid registration also a symmetrized version of the cost functional is evaluated and if for the direction selected in embodiment 38 this version leads to a lower value after non-rigid registration compared to rigid registration this direction is chosen for further processing; else if the registration in the other direction leads to a reduced value that direction is chosen, else the direction leading to the smaller value of this symmetrized version after the mentioned non-rigid registration is chosen.
40. The method according to embodiment 38 wherein the registration uses a motion model among one of those used for step f) in embodiments 10-22.
41. The method according to one of the embodiments 36-40, wherein, if the registration in step f) uses a cost functional, this cost functional and the cost functional mentioned in embodiment 36 are the same.
42. The method according to one of the embodiments 36-40, wherein, if the registration in step f) uses a cost functional, the cost functional mentioned in embodiment 36 is a symmetrized version of the one used in step f).
43. The method according to one of the embodiments 33-34 or 36-41, wherein the cost functional is one of the similarity measures sdnN, sdnSP, sdnNaddSymm or sdnSPaddSymm.
44. The method according to embodiment 35 or 42, respectively, wherein the mentioned cost functional is the similarity measure sdnNsymm or sdnSPsymm, respectively.
45. The method according to embodiment 1, wherein the point set registration algorithm of Chui-Rangarajan (Chui und Rangarajan, CVPR 2000) is used for all registration steps adapted to the respective situation (for instance, concerning the motion model).
46. The method according to embodiment 1 wherein the extraction of the surface in steps a) and b) is done after a segmentation of the respective object for the respective point in time leading to a binary image.
47. The method according to embodiment 1, 26 or 46 wherein the segmentation is preceded by the cropping of a region of interest containing the object to be segmented or for which the surface shall be extracted, cropped from the respective 2D or 3D image.
48. The method according to embodiment 47 wherein the region of interest is a rectangular box.
49. The method according to embodiment 46 wherein the segmentation is preceded by a re-sampling of the image making its spatial distribution isotropic and/or by the preprocessing with an image smoothing filer, for instance an anisotropic diffusion filter.
50. The method according to embodiment 46 wherein the segmentation for one or more objects and for one ore more points in time is performed by a calculation of regions which are connected regions (components) in the image domain and wherein the user chooses interactively the components which shall form the binary image representing the segmentation of the respective object and respective point in time, in particular wherein an abstract representation of this components is provided and the user chooses the components using this abstract representation.
51. The method according to embodiment 50 wherein the components are the confiners of the image calculated for all available grey levels and the abstract representation is the confinement tree wherein each confiner is represented graphically by a small two dimensional figure, for instance a square, circle, or triangle, etc., which the user can select interactively.
52. The method according to embodiment 46 wherein during segmentation wherein a segmentation method is used requiring the interactive placing of seed points in the respective image domain.
53. The method according to the embodiments 1, 25, 26, 46, 47, 52, wherein one point in time is selected and grey value based rigid and/or non-rigid image registration is performed registering the image of the selected point in time on those of the other points in time, and wherein, by the so obtained transformations, the surface, the segmented image region, the surface point sets, the region of interest, or/and the seed points extracted, or defined, respectively, for the selected point in time is transferred to the images corresponding to the other points in time and wherein the further surface extraction or image segmentation steps are based on the transferred surface, segmented image region, surface point sets, region of interest, or/and seed points.
54. Method according to embodiment 53 wherein the image for the selected point in time is registered with an atlas image and wherein the surface, the segmented image region, the region of interest, or/and the seed points, mentioned in embodiments 1, 46, 47, 52 are defined for the atlas image and transferred to the image for the selected point in time and wherein the further surface extraction or image segmentation steps are based on the transferred surface, segmented image region, surface point sets, region of interest, or/and seed points.
55. The method according to embodiment 46 wherein all the deformable registration steps consists of a demons based registration applied to the binary images mentioned in embodiment 46.
56. The method according to embodiment 55 wherein the demons based registration is applied to the distance transform of the binary images mentioned in embodiment 46.
57. The method according to one of the embodiments 46-56 wherein a point set registration algorithm is used and the point sets are extracted from the connected components of the binary image.
58. The method according to embodiment 57 wherein the technique for extracting the point sets is the marching cubes algorithm, sampling surface points and leading to a surface mesh.
59. The method according to embodiment 1 wherein in step e) the chosen surfaces are visualized together with one or several planes representing the image's grey values in the considered reference system wherein, if appropriate, the grey value image is transformed with the transformation calculated in step c) for the respective reference object.
60. The method according to embodiment 1 followed by a visualization of the scene containing the object(s) to be analyzed for both points in time after registration in step f); in particular, a scene is visualized of the object(s) to be analyzed after rigid and/or after affine and/or after deformable registration at each desired level of fineness if such a deformable registration has been performed.
61. The method according to embodiment 1 wherein in step e) the objects corresponding to the same point in time are visualized with the same color, or/and with the same patterns or/and surface representations, and objects corresponding to different points in time are visualized with different colors, or/and with different patterns or/and surface representations.
62. The method according to embodiment 1 wherein different objects are visually distinguished by their surface (or other) pattern or/and transparency or/and surface representation or/and color.
63. The method according to embodiment 1 wherein objects belonging to different reference systems are visually distinguished by their surface (or other) pattern or/and transparency or/and surface representation or/and color; this pattern is the same for all objects belonging to the same reference system, respectively.
64. The method according to embodiment 60 wherein the motion in a specified subset of the surface points is visualized by the respective motion vectors and/or by a color or grey-intensity coding its magnitude.
65. The method according to embodiment 64 wherein the subset is specified by a surface point extraction and optionally a sub-sampling and/or smoothing algorithm according to one of the embodiments 25-29.
66. The method according to embodiment 1 wherein besides the motion parameters and the similarity measures (and/or the cost values) also a quantification of the motion vector in the object's surface points and/or of the magnitude of the motion in the objects' surface points and/or of the change in the similarity measure (and/or the cost values) and/or of the global bending coming with the transformation (in case that a deformable registration has token place) and/or other meaningful values describing the motion and deformation is performed.
67. The method according to embodiment 65 wherein the mean value or the root mean square value for the length of all considered motion vectors is calculated.
68. The method according to embodiment 64 wherein the motion vector is visualized and/or its coordinates and/or its length is calculated for any point of the considered object which is selected interactively by the the user, for instance by a mouse click.
69. The method according to embodiment 60 wherein the geometric transformation of an object is shown by creating surfaces showing the object's surface transformed only partially, with more and more complete parts of the transformation, and visualizing these surfaces successively as an animation.
70. The method according to embodiment 1 wherein a quantification and/or a statistical analysis of the quantified values and/or a visualization according to one of the tools described in (Mattes, Eils, Fieres, Demongeot, "Quantitative Analysis, Visualization, .." German Patent Application, US Patent Application, PCT Patent Application WO 02/071333 A2) is performed.
71. The method according to embodiment 1 wherein, if a deformable registration is performed and a cost functional is used, this cost functional can also comprise a term quantifying the global bending of the space (the integral bending norm) weighted by a parameter and added to the other terms.
72. The method according to embodiment 1 wherein the objects to be analyzed are objects introduced into a living entity.
73. The method according to embodiment 72 wherein the reference objects belong to the mentioned living entity.
74. The method according to embodiment 72 or 73 wherein the living entity is the human body.
75. The method according to embodiment 74 wherein the objects to be analyzed are stent-grafts introduced during the endovascular repair of an aneurysm or a stenosis.
76. The method according to embodiment 75 wherein the images are Computer Tomography images.
77. The method according to embodiment 75 or 76 wherein the stent-grafts are introduced after endovascular repair of an abdominal, infra-renal, or thoracic aneurysm.
78. The method according to embodiment 77 wherein the spinal canal and/or the renal arteries are selected as reference objects, respectively, defining a reference system, respectively.
79. The method according to embodiment 76, 77, or 78 wherein the stent-graft is segmented by region growing and/or by threshold-segmentation (according to Mattes et al. SPIE Medical Imaging: Image Processing 2006) preferably after the interactive extraction of a region of interest.
80. The method according to embodiment 78 or 79 wherein the spinal canal and/or the renal arteries are segmented using the fast marching level set method (preferred) and/or the standard level set method and/or surface snakes.
81. Computer program comprising a program code means for performing a method according to any one of the preceding embodiments, if the computer program is executed by a computer.
82. A computer program product comprising a program code means which is stored on a computer readable medium, in order to perform a method according to any of embodiments 1-80, if the program is executed on a computer.
83. A data processing system particularly for performing the method according to any one of embodiments 1-80.

### Brief Description of the Drawings

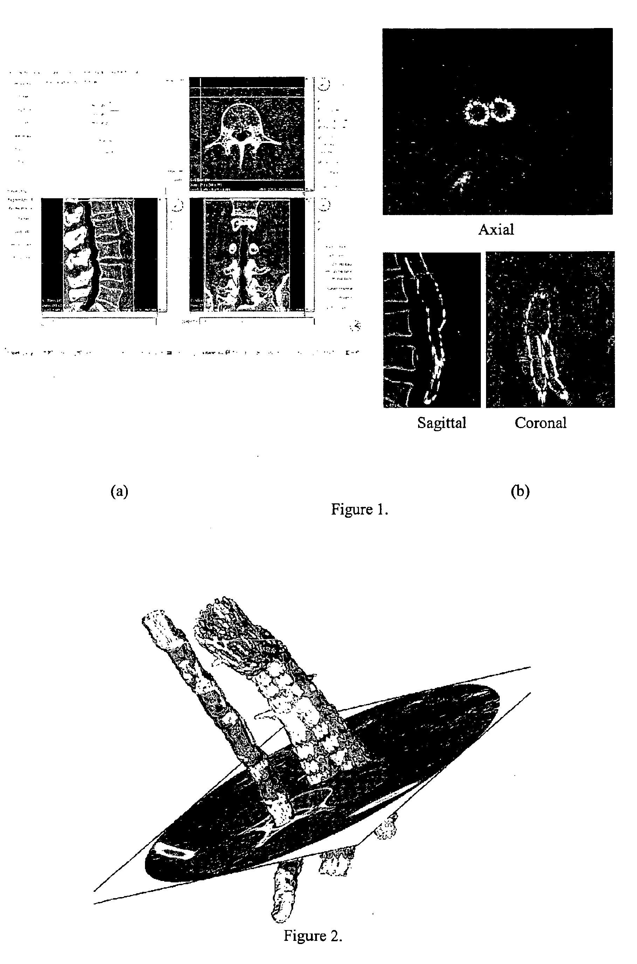

Figure 1 shows the segmentation of spinal canal (a) and stent (b). In (a) the graphical user interface of a segmentation software tool (Fritscher, K., R. Schubert. A software framework for preprocessing and level-set segmentation of medical image data. In: SPIE Medical Imaging 2005: Image Processing 1742-1752) is depicted. The axial, sagittal, and coronal view are arranged as in (b). The segmentation result is shown in red. The red surface in (a) does not completely fill the spinal canal but the segmentation is reproducible for both time steps and leads to a low residual error after rigid registration (see Table 1).
Figure 2 shows the spinal canal after rigid registration and the stent-graft transformed accordingly. Green: first point in time, magenta: second point in time (11 months difference). A slice of the original 3D CT image is faded in.

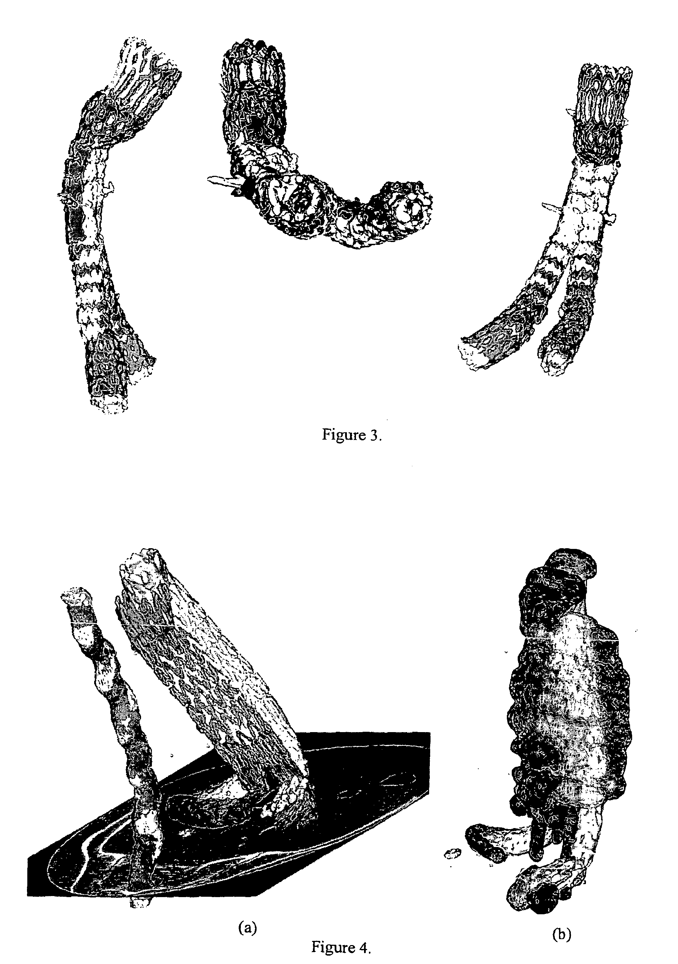

Figure 3 shows the stent of Figure 1 after rigid registration in different views.

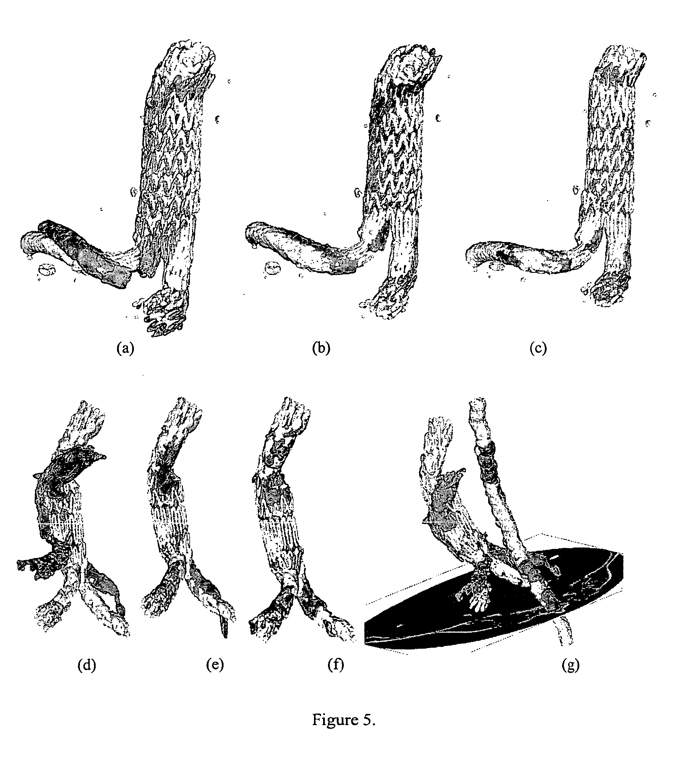

Figure 4 shows patient 8 (according to the numbering of Table 1): (a) As in Figure 2, the spinal canal is shown after rigid registration - the later point in time (magenta) is registered (and transformed) onto the earlier point in time (green) - and the stent corresponding to the later point in time (colours as for the spinal canal) is transformed accordingly. There are 15 months difference between the first and the second point in time. The emergence of a dangerous kink in the left branch is clearly visible (cf., Fig. 5). (b) The aorta (including aneurysm) is shown for both time points (semi-transparent for the first time point) together with the stent at the first point in time.

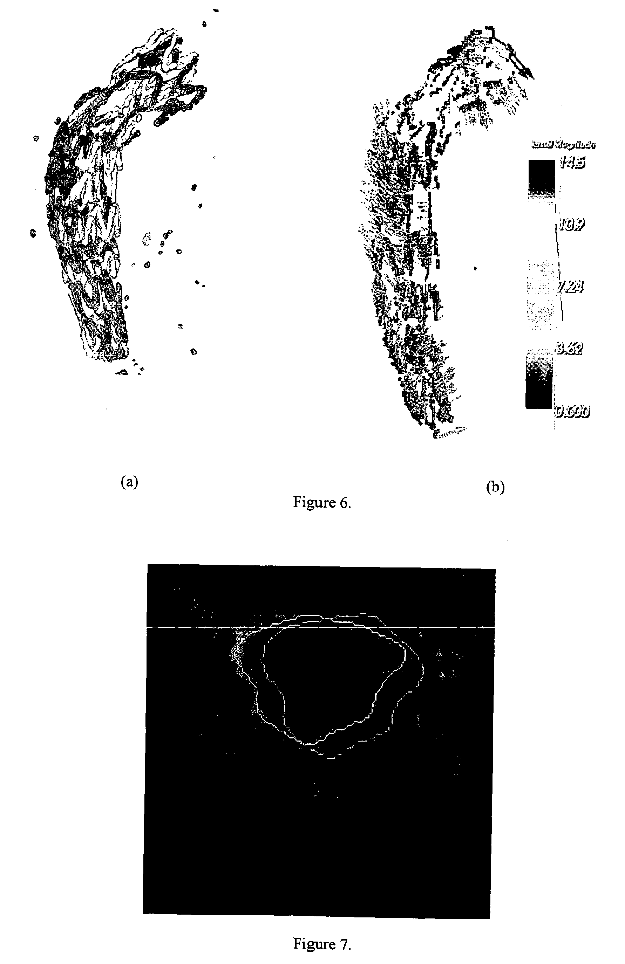

Figure 5 shows the stents of (according to the numbering of Table 1) patients 8 (a-c) and 6 (d-g) after (a,d) rigid, (b,e) affine, and (c,f) thin-plate spline, 12 landmarks, registration [Mattes et al. 2002] (see text for details about the registration method and see Table 1 for numerical results; green stents at the first point in time, magenta: second point in time). (g) Depicts the transformation of the stent of patient 6 for the second point in time according to the rigid registration of the spinal canals. It can be seen that the formation of the kink ((a) and (d), respectively) can be mainly described by relatively global transformations ((b) and (e), respectively). From (c,f) local displacements in each point can be calculated (see also Figure 6).
Figure 6 illustrates the visualization of the local motion of a stent-graft. (a) stent for two points in time after rigid registration, (b) illustration of the motion vectors describing the transformation obtained after non-rigid registration. The length of each vector is encoded by its color, blue is smallest, red is highest.
Figure 7 depicts an axial 2D slice of a 3D CT image corresponding to the point in time in which an automated segmentation of the spinal canal shall be performed in step 1 described below (not the selected point in time). The green line represents a result of the automated segmentation procedure based on transferring seed points after a grey value based rigid registration whereas the white line is obtained by transferring the surface of the spinal canal segmented in the selected point in time using the same transformation calculated during grey value based registration.

### Detailed Description of the Invention

Step1 (extraction of surface points, kept in a point set, for the reference object(s) for each considered point in time):
Our method consists in defining first a reference system, preferred based on the spinal canal in case of the motion analysis of aortic stent-grafts, together with the renal arteries in case of infra-renal aneurysms. For the other applications mentioned above other reference systems may be better suited.

Preferably, the chosen reference object is segmented by an image segmentation procedure, leading to a binary image in which the frontier between its black and its white pixels is an estimate of the object's surface. Afterwards, this surface is extracted using the binary image and surface points are chosen from the extracted surface. We use the marching cubes algorithm to extract the surface form the binary image, as described in (SoF00) and implemented as in the VTK library, which leads to a polygonal mesh and we take the corner points of the mesh as surface points. If different reference objects are considered the segmentation may lead to a binary image for each reference object or one binary image may represent the surfaces of different objects. The surfaces are extracted for each reference object. This procedure is repeated for all considered points in time and the extracted surface points are for each point in time (and for each reference object) kept in a different point set.

Alternatively, a specific surface representation (such as control points and other parameters to represent surface splines) may be kept in a well suited data structure or in a file.

Our images may be 2D images but preferred 3D images. Before running the proper segmentation, we resample the image (we redefine the pixel lengths) in order to get an isotropic spatial resolution (the same pixel length in all directions) and we extract an region of interest (ROI) containing the part of the image confined as small as possible such that it still shows the complete reference object to be segmented. We extract the ROI as a rectangular box usually with manual interaction. It has to be taken into account that, roughly, a corresponding ROI is extracted for both points in time to be registered in step 3. For both sub-steps (re-sampling and ROI extraction) we keep the necessary information (for instance, the origin of the ROI with respect to the origin of the original image) such that we can afterwards calculate the position of the surface points in the same Cartesian reference system with isotropic length units (for instance in mm) for all considered objects in the (2D or 3D) image, including in particular the "object to be analyzed" extracted in step 2; this representation of the surface points we calculate also if we omit the re-sampling step.

An initial step of the chosen segmentation method may be an image pre-processing step, as an image smoothing filter, for instance, an anisotropic diffusion filter (SoF00). Another initial step may be the placing of seed points in the image region of the object to segment by manual interaction.

We call the segmentation of an object, or the extraction of its surface, respectively, in an image to be "automated" if there is no user interaction with respect to this image during segmentation, or surface extraction, respectively. In order to automate the segmentation (or to reduce the user interaction) we can *select* a specific point in time (which will often be the first point in time available), segment the image for that point in time as described above, perform a grey value based rigid and non-rigid registration (SoF00) of this point in time to all other points in time, and transfer by the calculated transformations the positions of the seed points, of the region(s) of interest, of the extracted surface points or of the whole surface or segmented region to the images of the other points in time in order to *initialize* the segmentation for these images. For the segmentation of the spinal canal in the applications described above and for the not selected point(s) of time we use preferably rigid registration with Normalized Mutual Information as similarity measure as described in the ITK Software Guide (http://www.itk.org) using as parameter settings a number of 50 histogram bins and of (the number of voxels)/10 spatial samples to calculated the similarity measure. For registration we use a ROI in the selected point in time containing a region broadly around the spinal canal but not the round borders of the abdominal area; usually we will take the ROI used for segmentation of the spinal canal in the selected point of time. After, for segmentation, we transfer the seed points set for segmentation (see below) using the transformation calculated during the registration process and we transfer the ROI used for segmentation in the selected point of time using this transformation as well; we perform the segmentation using the transferred seed points and ROI and the same parameter settings as for the selected point in time. The green line in Fig. 7 represents a result of this procedure for a selected axial slice of a 3D CT image whereas the white line is obtained by transferring the surface of the spinal canal segmented in the selected point in time using the same transformation calculated during registration. If the ROI used for segmentation in the selected point of time is not fully contained in the image of the other point in time we recalculate it such that this condition is satisfied and we perform the segmentation for the selected point in time again using this ROI and transfer this ROI to the other points in time for spinal canal segmentation. For other applications we proceed correspondingly. If we have more than two points in time the registration in the time sequence shall be performed with one of the methods as described in (MEF01).

The segmentation for the selected point in time above can be automated by the rigid and non rigid grey level registration of the image for that point in time with an "atlas image" (SoF00) representing the kind of object to be segmented and for which features are already defined such as seed points, regions of interest, surface points or/and the whole surface or segmented image regions. All, several or only one of these features can be chosen and transformed according to the transformation obtained by the registration with the atlas image in order to initialize the segmentation of the image for the selected point in time. If during registration the atlas image has been chosen to be the fixed image then the inverse of the transform obtained during registration has to be chosen. The atlas can consist only of a representative image of the object to be segmented at the considered point in time or it can be build as a mean image constructed after registration of different images of the same kind or in addition to the mean image it can represent the statistical variation as well (SoF00).

The atlas can also represent only surfaces or surface points of the object of interest; in this case a template matching approach has to be chosen in order to register the atlas (for instance based on a mean surface) with the image (SoF00).

Confiners and the confinement tree (also called component tree) can be used for image segmentation as well. They are defined as described in (MEF01). They define connected image regions which can be selected interactively.

Finally, instead of segmenting the image followed by the extraction of a surface, surface points and edges can be also extracted by an edge detection filter, for instance the Canny filter (SoF00), optionally followed by an edge selection operator or even by a surface reconstruction algorithm based on a point set.

In order to reduce the computation time for the following registration step and to improve the registration accuracy each point set may be subjected to a sub-sampling (also called point decimation) and/or smoothing procedure which preserves the global geometry of the arrangement of the points in the respective point set but reduces the number of points or produces a smoother global arrangement. For point decimation (sub-sampling) we use for instance, the algorithm implemented in the VTK library (http://public.kitware.com/VTK/doc/nightly/html/classvtkDecimatePro.html) based on the algorithms described in (SZL92) and (Hop96), which we call vtkDecimate, or the algorithm described in SFY96 which we call octreeDecimate. For smoothing we use the algorithm implemented in the VTK library for that purpose (http://public.kitware.com/VTK/doc/nightly/html/classvtkSmoothPolyDataFilter.html),
which we call vtkSmooth, or the algorithm described in (WSS04), which we call preserve Smooth, or the algorithm described in (OBS02), which we call anisotropicSmooth.

The spinal canal deforms only little and it is relatively easy to segment it reproducibly for different points in time. The renal arteries allow to determine the migration of the stent-graft with respect to the aorta.

We use the "fast-marching-level-set" algorithm (Fig. 1; J. A. Sethian, Level Set Methods and Fast Marching Methods: Evolving Interfaces in Computational Geometry, Fluid Mechanics, Computer Vision and Material Science, 2nd Edition ed: Cambridge University Press, 1999) to segment the spinal canal and the renal arteries. For that purpose, firstly we resample the image in order to have an isotropic spatial resolution (see above) and we crop by manual interaction a region of interest (we use a rectangular box) as described above containing the spinal canal or the renal arteries in the image of the considered point in time. We set by manual interaction seed points in the middle of the spinal canal on two dimensional slices of the considered 3D image with a distance in axial direction of approximately 5 pixel lengths.

After we calculate a so called speed image by applying the "norm of the gradient", "Gauss", and "sigmoid" filters to the image to be segmented (Fritscher, K., R. Schubert. A software framework for preprocessing and level-set segmentation of medical image data. In: SPIE Medical Imaging 2005: Image Processing 1742-1752). We run the fast-marching-level-set algorithm on the speed image. A parameter called "stopping value" exists responsible for the size of the segmented object. Usually we use a stopping value between 8 and 10 and, preferred, we use the same stopping value for the same patient but different points in time. Preferred, in the Gauss filter we set the standard deviation to 2.0 and, following the ITK Software Guide (http://www.itk.org), we set the minimum and maximum values required by the sigmoid filter to (imageMin - imageMax)/2 and (imageMin + imageMax)/2, respectively, where imageMin and imageMax denote, respectively, the minimum and the maximum grey value in the image after application of the "norm of the gradient" and "Gauss" filters.

Alternative segmentation methods (computational less efficient) would be more sophisticated level-set methods or approaches based on snakes (M. Kass, A. Witkin, D. Terzopoulos, "Snakes: active contour models," International Journal on Computer Vision, vol. 1, pp. 321-331, 1987).

Step 2 (extraction of surface points, kept in a point set, for the object for which the motion shall be analyzed, which we call "object to be analyzed", for each considered point in time):
For the extraction (and eventual selection by downsampling, etc.) of surface points (or whole surfaces) for the object(s) to be analyzed the same methods can be used as described in step 1 for the reference objects, in particular concerning the ROI extraction and the automation.

The stent-graft for aortic aneurysms after endovascular repair could be segmented either by thresholding or using a "region growing" algorithm (Fig. 1). For the region growing algorithm seed points have to be set by the user. Preferred, we use a threshold in the upper quarter of the image's grey values or seed points corresponding to bright points of the stent device.

Step 3 (rigid registration of the reference object and rigid transformation of the object to be analyzed according to the transformation of the reference object during the registration process; possible visualization of the objects in the same reference system):
To place the stent-graft in the reference system defined by the spinal canal we register rigidly the spinal canal extracted for both points in time and transform the stent-graft by the transformation matrix calculated during this registration step. High registration accuracy is obtained by registration in both directions, point in time one on point in time two and vice versa, and by taking the result with smaller registration error εᵣ which we call also sdnN and which is called Cₚᵣₒᵥ in (Mattes, Eils, Fieres, Demongeot, "Quantitative Analysis, Visualization, .." German Patent Application, US Patent Application, PCT Patent Application WO 02/071333 A2). We have Cₚᵣₒᵥ = (1/σ)Σ_{i=1...N} σᵢ(*d*(*aᵢ*, *bᵢ))*² where *aᵢ* are the points in the moving point set and, for each *aᵢ, bᵢ* is its nearest neighbour in the fixed point set, *d(aᵢ, bᵢ)* is the Euclidean distance between *aᵢ* and *bᵢ,* and σ = Σ_{i=1...N} σᵢ. A simplified version of sdnN - where σᵢ = 1 as used for all examples below and for Figures 2-6 - is the sum for each point in the moving point set of the squares of the distances to its nearest neighbour in the fixed point set, normalized by the number of points in the moving point set. Correspondingly, sdnSP is obtained by replacing in sdnN the nearest neighbour in the fixed point set with the nearest neighbour on the fixed surface. sdnNsymm are obtained by calculating sdnNsymm = ½ (sdnN(dir1) + sdnN(dir2)), where sdnN(dir1) = sdnN and where the point set which is considered to be fixed in sdnN(dir1) is considered to be moving in sdnN(dir2) and vice versa. sdnNaddSymm is defined by sdnNaddSymm = ½ (sdnN(dir1) + sdnN(dir2,deci)) where sdnN(dir2,deci) is calculated analog to sdnN(dir2) but where the point sets are strongly down-sampled (decimated) for this calculation. sdnSPsymm and sdnSPaddSymm are calculated equivalently from sdnSP.

The registration error is minimized using the Levenberg-Marquardt algorithm (as in Mattes, Eils, Fieres, Demongeot, "Quantitative Analysis, Visualization, .." German Patent Application, US Patent Application, PCT Patent Application WO 02/071333 A2).

Only surface points are transformed (the structure of the surface mesh keeps unchanged), not images.

The geometric centers of the surface of the object to be analyzed for the considered points in time can be calculated in this reference system (or, if calculated after step 3, they can be transformed into this reference system by transforming them with the same rigid transformation as the object to be analyzed) and for two considered points in time the vector relating the two geometric centers and its length can be calculated for the purpose of quantification.

Step 4 (Rigid registration of the object to be analyzed and possible visualization of the untransformed and transformed surfaces):
After transforming the stent-graft into this reference system we calculate its rigid motion by registration of the stent-graft for both points in time as described above for the spinal canal. This allows to describe its global migration as a 3D translation and rotation by quantitative parameters: a translation vector (and its length) and the translation angles. The translation vector can be compared to the vector between the geometric centers of the surface of the object to be analyzed for two points in time obtained after step 3.
The transformation can be visualized by an animation.

Step 5 (Non-rigid registration of the object to be analyzed and possible visualization of the untransformed and transformed surfaces):
Now, using the same cost functional (registration error) as for rigid registration, we register the stent-graft point sets also non-rigidly, first using an affine transformation. After, we register with a thin-plate spline based algorithm (Mattes, J., Fieres, J. and Eils, R. A shape adapted motion model for non-rigid registration. In: SPIE Medical Imaging 2002: Image Processing, 2002, 518-527). We call the insertion scheme for control point placing proposed in this paper the cluster method of Fieres-Mattes. An alternative insertion scheme proposed in Szeliski und Lavallée (IJCV 1996) for volume B-splines we call the octree scheme of Szeliski-Lavallée. All registration steps have been performed using octree-distance-map based point set registration algorithms with Levenberg-Marquardt optimization (Lavallée and Szeliski IEEE Transact. PAMI 1995).
The transformation can be visualized by an animation.

Step 6 (Quantification and visualization of the non-rigid and of the total motion):
Measuring the change in the residual error εᵣ after each registration step (coming with an increasing number of degrees of freedom) represents an elementary possibility to quantify the amount of morphological change of the stent-graft. Another possibility is based on the quantification of the motion vectors. They are derived as the vectors starting with the object to be analyzed in the common reference system after step 3 (for the total motion) or after step 4 (for the non-rigid motion) and the point in time for which the surface points are transformed during registration (which we call "moving point in time") and ending with the respective transformed point after non-rigid regsitration. The mean of the root mean square of the length of these vectors can be used for quantifying the motion and they can be used for visualizing the motion as shown in Fig. 6.

### Examples

In a clinical evaluation we investigated a sample of 9 patients all of which have been treated with the same kind of stent-graft device (Zenith). The corresponding CT image stacks consist of slices with 0.9 mm thickness, 0.5 mm x,y-spacing, 512 x 512 pixels per slice, and a number of 200 up to 250 slices, which we resampled to over 400 slices in order to obtain isotropic images with 0.5mm thickness. The results are resumed in Table 1.

**Table 1.**

| **Patient** | **ε -Spinal Canal** | **Migration** | **ε - Stent** | **ε - affin** | **ε - 12LMs** | **Migr. Aorta** | **Migr. Stent rel.Aorta** |
|---|---|---|---|---|---|---|---|
| 1 | 0,69 | 7,42 | 1,26 | 0,96 | 0,30 | 9,40 | 4,34 |
| 2 | 0,70 | 2,98 | 0,21 | 0,17 | 0,16 | | |
| 3 | 0,76 | 3,22 | 0,52 | 0,35 | 0,14 | 3,21 | 0,98 |
| 4 | 1,04 | 12,49 | 4,02 | 1,93 | 1,01 | 14,24 | 1,86 |
| 5 | 1,10 | 7,06 | 2,85 | 1,68 | 0,71 | | |
| 6 | 1,11 | 19,51 | 21,81 | 3,09 | 1,20 | | |
| 7 | 1,11 | 5,11 | 2,24 | 1,21 | 0,34 | | |
| 8 | 1,63 | 11,87 | 10,69 | 2,04 | 0,82 | 13,60 | 3,82 |
| 9 | 1,72 | 5,75 | 1,71 | 1,42 | 0,61 | | |

Table 1 shows the quantitative registration results for 9 of the evaluated 22 patients. All distance specifications are indicated in mm. "ε -Spinal Canal" denotes the residual error εᵣ after rigid registration of the spinal canal, "ε - Stent", "ε - affine", and "ε -12LMs" denote that after rigid, affine, and thin-plate spline, 12 landmarks, based registration of the stents, respectively. The most important deformations appear in situations in which the residual error εᵣ is strongly reduced (patients 6 and 8). Mainly, they can be described by an affine transformation. The migration of the stent relative to the aorta has only been calculated in cases where the migration relative to the spinal canal was high. However, independently from a complication or a strong change in εᵣ rather small values occur in all cases.

## Claims

1. A method for the quantification and visualization of the motion and deformation of one or several objects inside a living entity, called the objects to be analyzed, imaged by an imaging system comprising the steps of:
a) Extraction of the surface of one or several reference objects represented in the images, preferably 3D images, taken for two or more points in time,
b) extraction of the surface of one or several objects to be analyzed represented in the images, preferably 3D images, taken for two or more points in time,
c) registration of one of the reference objects considered in a) based on the extracted surfaces for two points in time according to a motion model describing the motion of the reference system and allowing to determine the motion parameters of this motion model,
d) transformation of the surfaces of one or more of the object(s) to be analyzed for the moving point in time in c) according to the motion parameters and the motion model determined and used, respectively, in c) and optionally of one or more of the reference objects for the same point in time;
where in step a) or/and in step b) at least for one point in time the extraction of the surface is automated and where steps a)-d) are followed by one or both of the following steps:
e) Visualization of the scene containing zero, one or more reference objects and one or more objects to be analyzed, the surface of each shown optionally for one or both points in time used during registration but after execution of steps a)-d), i.e. transformed for the moving point in time (according steps c) and d)), respectively, and/or
f) registration of one or more objects to be analyzed for the two points in time considered in step c), after having these objects transformed for the moving point in time, according to step d).

2. The method according to claim 1
• wherein steps a) c), d) and e) are omitted or replaced by a rigid grey value based registration for which optionally a ROI is extracted around the reference object in the moving point in time and
• wherein step f) is based directly on the surfaces extracted in step b) or, respectively, on these surfaces after having them transformed according to the rigid grey value based registration mentioned above and
• wherein optionally step b) is replaced by the extraction of a region of interest (ROI) around the object(s) to be analyzed for the moving point in time of step f) and where in step f) a grey value based registration of this ROI with the image of the fixed point in time is performed.

3. The method according to claim 1 or 2 wherein the registration in step c) consists of a rigid registration and/or the registration in step f) consists of a rigid followed by a non-rigid registration wherein, preferably, the non-rigid registration in step f) consists of an affine registration followed by a deformable registration allowing successively more degrees of freedom, in particular a parametric deformable registration using a motion model based on volume splines, preferred thin-plate splines and the insertion scheme of the cluster method of Fieres-Mattes for inserting control points, is applied.

4. The method according to one of the preceding claims
• wherein during or after the surface extraction in steps a) and b) surface points are extracted and kept in point sets in such a way that each point set represents the geometry of the corresponding surface sufficiently well for the subsequent registration, achieved preferably by the segmentation of the images leading to binary images and by the application of the marching cubes algorithm to the binary images leading to a surface mesh from which surface points are sampled, and wherein the said point sets are used for registration in step c) and/or in step f) and
• wherein for registering the moving point in time onto the fixed point in time in step c) and/or in step f) preferably the similarity measure sdnN, or alternatively sdnSP, is used and wherein, before the optimization of the cost functional, for efficient calculation of sdnN, or sdnSP, an octree-distance-map is pre-calculated around each point set, or surface, extracted for the fixed point in time corresponding to an object which shall be registered in step c) and/or in step f) and
• wherein the Levenberg-Marquardt method is used for optimization of the similarity measure or cost function during registration.

5. The method according to claim 4 wherein a sub-sampling algorithm is applied to one or more of the point sets in order to reduce the number of points in them while preserving the geometry of the arrangement of the points sufficiently well for the subsequent registration in step c) and/or in step f), preferred using one of the sub-sampling algorithms vtkDecimate or octreeDecimate, and/or wherein a surface smoothing algorithm is used, preferred one of the algorithms vtkSmooth, preserveSmooth or anisotropicSmooth.

6. The method according to one of the previous claims wherein, after registration in step c),
• the value of a cost functional is determined for the registered reference object(s),
• the point in time which has been considered to be moving (during registration in step c)) is considered to be fixed and the point in time which has been considered to be fixed is considered to be moving and a further registration (based on the same motion model) of the untransformed reference objects is executed under these conditions and
• the value of the cost functional above is determined for the reference object registered in the latter mentioned direction and
• wherein in the consecutive steps d) -f) the transformation calculated in c) is replaced by the transformation calculated by that registration step mentioned above which leads to the lower cost value.

7. The method according to one of the previous claims wherein, if step f) consists of a registration with a certain parametric motion model, preferred a rigid model, after this registration
• the value of a cost functional is determined for the registered object(s) to be analyzed, preferred the cost functional is one of the similarity measures sdnN, sdnSP, sdnNaddSymm, sdnSPaddSymm, sdnNsymm or sdnSPsymm, respectively,
• the moving point in time during registration in step f) is considered to be fixed and the point in time which has been considered to be fixed is considered to be moving and a further registration, based on the same motion model, of the objects to be analyzed transformed as after step d) is executed under these conditions and
• the value of the cost functional above is determined for the reference object registered in the latter mentioned direction and
• the transformation (calculated by the registration steps above) leading to the lower cost value is determined and afterwards
• a registration of the objects to be analyzed performed in the same direction as the registration leading to the lower cost value, called lc-registration, and starting with the objects to be analyzed transformed according to the 1c-registration, and using a motion model with more degrees of freedom than the motion model used for 1c-registration.

8. The method according to claim 7 wherein after the rigid and the subsequent non-rigid registration also a symmetrized version of the cost functional is evaluated and if for the direction selected in claim 7 this version leads to a lower value after non-rigid registration compared to rigid registration this direction is chosen for further processing; else if the registration in the other direction leads to a reduced value that direction is chosen, else the direction leading to the smaller value of this symmetrized version after the mentioned non-rigid registration is chosen.

9. The method according to one of the previous claims wherein the extraction of none of the surfaces in steps a) and b) might be automated but done after a segmentation of the respective object for the respective point in time leading to a binary image which is preceded by the cropping of a region of interest containing the object to be segmented or for which the surface shall be extracted, cropped from the respective 2D or 3D image.

10. The method according to one of the previous claims wherein one point in time is selected and grey value based rigid and/or non-rigid image registration is performed registering the image of the selected point in time on those of the other points in time, and wherein, by the so obtained transformations, the surface, the segmented image region, the surface point sets, the region of interest, or/and the seed points extracted, or defined, respectively, for the selected point in time is transferred to the images corresponding to the other points in time and wherein the further surface extraction or image segmentation steps for these other points in time are based on the transferred surface, segmented image region, surface point sets, region of interest, or/and seed points.

11. Method according to claim 10 wherein the image for the selected point in time is registered with an atlas image and wherein the surface, the segmented image region, the region of interest, or/and the seed points are defined for the atlas image and transferred to the image for the selected point in time and wherein the further surface extraction or image segmentation steps are based on the transferred surface, segmented image region, surface point sets, region of interest, or/and seed points.

12. The method according to one of the previous claims followed by a visualization of the scene containing the object(s) to be analyzed for both points in time after registration in step f); in particular, a scene is visualized of the object(s) to be analyzed after rigid and/or after affine and/or after deformable registration at each desired level of fineness if such a deformable registration has been performed.

13. The method according to one of the previous claims wherein in step e) and/or after step f)
• the chosen surfaces are visualized together with one or several planes representing the image's grey values in the considered reference system wherein, if appropriate, the grey value image is transformed with the transformation calculated in step c), or in step f), respectively, for the respective reference object
• and/or the values of one or several motion parameters calculated in the previous or subsequent claims, or any other related motion parameter, are displayed in the same display as the surfaces/images
• and/or the objects corresponding to the same point in time are visualized with the same color, or/and with the same patterns or/and surface representations, and objects corresponding to different points in time are visualized with different colors, or/and with different patterns or/and surface representations
• and/or the motion in a specified subset of the surface points is visualized by the respective motion vectors and/or by a color or grey-intensity coding its magnitude..

14. The method according to one of the previous claims wherein besides the motion parameters, the similarity values, and/or the cost values also a quantification of the motion vector in the object's surface points and/or of the magnitude of the motion in the objects' surface points and/or of the change in the similarity values and/or the cost values and/or of the global bending coming with the transformation, in case that a deformable registration has token place, and/or other meaningful values describing the motion and deformation is performed.

15. The method according to one of the previous claims wherein the geometric spatial transformation of an object is shown by creating surfaces showing the object's surface transformed, starting from the identity, successively better approximations of the considered geometric spatial transformation, and visualizing these surfaces successively as an animation.

16. The method according to one of the previous claims wherein the images are Computer Tomography images and wherein the objects to be analyzed are stent-grafts introduced during the endovascular repair of an aneurysm or a stenosis, in particular the aneurysm may be an abdominal, infra-renal, or thoracic aneurysm and wherein the spinal canal and/or the renal arteries are selected as reference objects, respectively, defining a reference system, respectively.

17. The method according to claim 16 wherein the stent-graft is segmented by region growing and/or by threshold-segmentation preferably after the interactive extraction of a region of interest and/or wherein the spinal canal and/or the renal arteries are segmented using the fast marching level set method (preferred) and/or the standard level set method and/or surface snakes.

18. Computer program comprising a program code means for performing a method according to any one of the preceding claims, if the computer program is executed by a computer.

19. A computer program product comprising a program code means which is stored on a computer readable medium, in order to perform a method according to any of claims 1-80, if the program is executed on a computer.

20. A data processing system particularly for performing the method according to any one of claims 1-19.
